Europäisches Patentamt

European Patent Office

Office européen des brevets

(11) Numéro de publication: **0 034 964**
**A2**

## (12) DEMANDE DE BREVET EUROPEEN

(21) Numéro de dépôt: 81400196.2

(22) Date de dépôt: 09.02.81

(51) Int. Cl.³: **B 64 C 25/00**
**G 01 G 19/07**

(30) Priorité: 20.02.80 FR 8003701
12.06.80 FR 8013050

(43) Date de publication de la demande:
02.09.81 Bulletin 81/35

(84) Etats contractants désignés:
DE GB

(71) Demandeur: MESSIER-HISPANO-BUGATTI (S.A)
5, rue Louis Lejeune
F-92120 Montrouge(FR)

(72) Inventeur: Masclet, Jean
11, Boulevard Davout
F-75020 Paris(FR)

(72) Inventeur: Veaux, Jacques
16, Boulevard de la liberté
F-92320 Chatillon(FR)

(74) Mandataire: Flavenot, Bernard
Société S.E.D.I.C. 40 rue Victor Basch
F-92120 Montrouge(FR)

(54) Dispositif de détection du déplacement d'au moins un point par rapport à un référentiel et application à la détection de l'état sous-gonflé de pneumatiques et/ou de masse et centrage pour aerodynes.

(57) La présente invention concerne les dispositifs de détection du déplacement d'un élément (101, 201) par rapport à un référentiel (101, 113-201, 213). Le dispositif se caractérise essentiellement par le fait qu'il comporte une barre de recopie (105-205), des moyens de liaison d'une première extrémité (111, 211) de ladite barre avec ledit élément (106, 107, 206, 207) l'autre extrémité (112, 116-212, 216) étant apte à coopérer avec des moyens de détermination du déplacement de cette seconde extrémité par rapport au référentiel.

Ce dispositif trouve une application particulièrement avantageuse pour déterminer la déformation sur les atterrisseurs des aérodynes.

./...

EP 0 034 964 A2

FIG.1

DISPOSITIF DE DETECTION DU DEPLACEMENT D'AU MOINS
UN POINT PAR RAPPORT A UN REFERENTIEL ET APPLICA-
TION A LA DETECTION DE L'ETAT SOUS-GONFLE DE
PNEUMATIQUES ET/OU DE MASSE ET CENTRAGE POUR
AERODYNES

1

La présente invention concerne les dispositifs de détection du déplacement d'au moins un point par rapport à un référentiel, plus particulièrement applicable dans les systèmes de détermination de l'état sous-gonflé des pneumatiques et/ou de masse de centrage pour les aérodynes équipés d'atterrisseurs principaux à balancier portant par exemple une paire de roues équipées de pneumatiques en diabolo et disposées dans les plans parallèles de part et d'autre du balancier.

Des dispositifs de détection du déplacement d'au moins un point sur un corps matériel sont déjà connus ; une grande majorité de ceux-ci sont constitués essentiellement d'une pièce qui suit le déplacement du corps sur lequel est situé le point et des jauges de contraintes liées à la pièce qui interprètent le déplacement du point.

Ces dispositifs donnent de bons résultats dans certains cas d'application, mais ils présentent malgré tout des inconvénients. Notamment du fait des jauges elles-mêmes qui doivent être collées sur la pièce. Comme cette pièce suit les déformations, il arrive que les jauges se décollent et ne jouent plus leur rôle. De plus, les déformations de ces pièces ne sont pas fiables aux déformations du corps et elles peuvent donner des mesures erronées.

Enfin, il est très difficile avec ce genre de mesure de décomposer les déformations et donc de les analyser

2

pour les interpréter.

La présente invention a pour but de pallier cet inconvénient et de réaliser un dispositif permettant de détecter simplement mais avec précision, le déplacement d'au moins un point d'un corps déterminé, par rapport à un référentiel.

Plus précisément, la présente invention a plus particulièrement pour objet un dispositif de détection du déplacement d'un élément par rapport à un réfentiel, caractérisé par le fait qu'il comprend une barre de recopie, des moyens de liaison d'une première extrémité de ladite barre avec ledit élément, l'autre seconde extrémité de ladite barre étant apte à coopérer avec des moyens de détermination du déplacement de cette seconde extrémité par rapport audit référentiel.

Selon une autre caractéristique de la présente invention, les moyens de détermination du déplacement de cette seconde extrémité comprennent au moins un capteur comportant au moins deux parties actives l'une étant située sur ladite barre de recopie, l'autre fixée par rapport audit référentiel.

Selon une autre caractéristique de la présente invention, le dispositif comprend un deuxième capteur, les premier et deuxième capteurs étant situés sur deux axes non confondus concourants en un point.

D'autres caractéristiques et avantages de la présente invention apparaîtront au cours de la description suivante donnée en regard des dessins annexés à titre illustratif, mais nullement limitatif, dans lesquels :

la figure 1 représente, dans une vue schématique éclatée semi-coupée, un mode de réalisation d'un

3

dispositif selon l'invention, dans une application aux aérodynes à la détermination du déplacement d'un balancier d'atterrisseur principal par rapport à la jambe le supportant

- la figure 2 représente, dans une vue schématique, un autre mode de réalisation d'un dispositif selon l'invention.

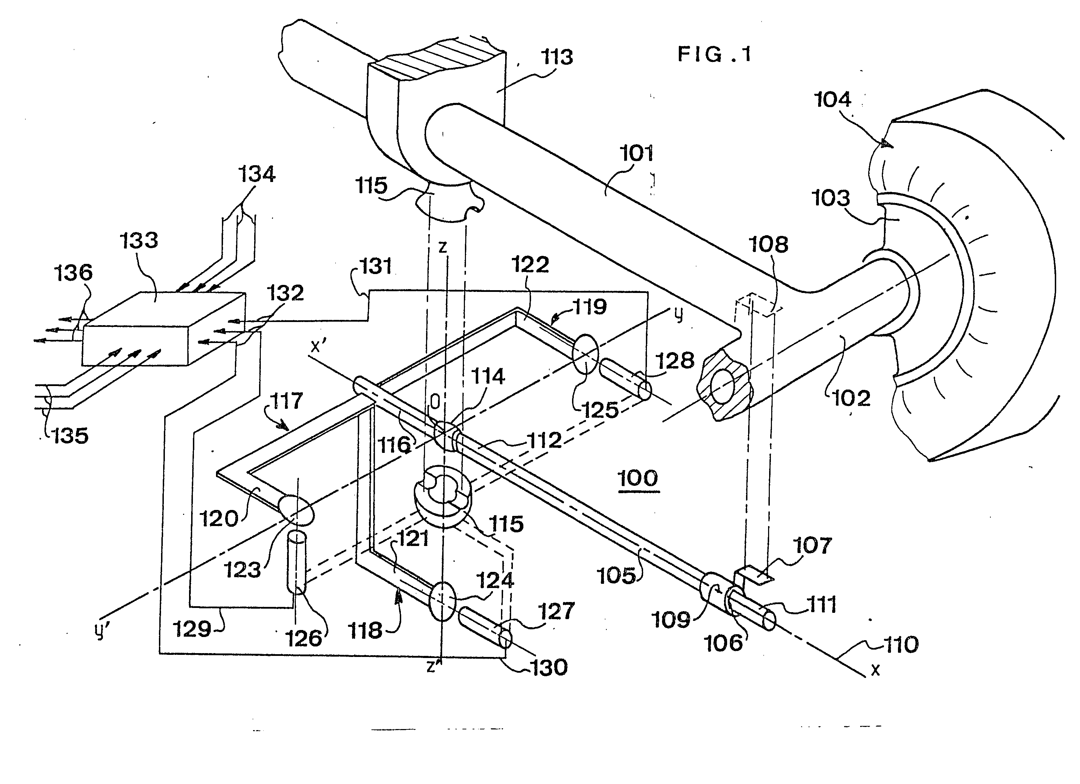

La figure 1 représente sous forme schématique, en vue éclatée écorchée, un mode de réalisation d'un dispositif 100 de détection du déplacement d'au moins un point par exemple d'un balancier 101, d'un atterrisseur d'aérodyne comportant par exemple sur un essieu 102 une roue 103 munie d'un pneumatique 104.

Ce dispositif comprend une barre 105 de préférence cylindrique, réalisée dans un matériau rigide, mais léger comme par exemple de l'alliage d'aluminium. Cette barre 105 est liée à son extrémité 111 au balancier 101 par une liaison comme par exemple une rotule 106 solidaire d'une patte de fixation 107 qui sera solidarisée au balancier de préférence dans cette application au voisinage de sa partie 108 qui supporte l'essieu 102 des roues. Il est bien précisé que cette rotule 106 permet à l'axe essentiellement de pivoter autour d'un point défini sensiblement sur la figure en 109 sur l'axe 110, mais absolument pas autour de cet axe 110. En fait, cette rotule 106 est équivalente à une rotule universelle dans laquelle il a été supprimé un degré de liberté ; celui qui empêche la barre 105 de tourner sur elle-même.

Cette barre coopère sensiblement à son autre extré-

4

mité 112 avec un référentiel qui, dans cet exemple de réalisation sera lié à la jambe 113, supportant le balancier 101.

Cette barre coopère avec ce référentiel par une rotule 114 qui a été représentée schématiquement par une partie 115 fixée sur la jambe 113 ou éventuellement sur le balancier 101 près de la jambe, à un endroit qui pourrait être considéré avec une bonne approximation comme relativement fixe par rapport à la jambe 113 ou au corps de l'avion.

Il est, de plus, précisé que cette rotule permet avantageusement une translation de la tige 105 dans le corps de la rotule 114.

Dans un mode de réalisation avantageux comme représentée sur la figure, l'extrémité 112 de la barre 105 dépasse sensiblement la rotule 114 pour émerger de celle-ci en 116 en une partie opposée, à celle fixée par la patte 107 sur le balancier 101, par rapport à la rotule 114.

Cette partie 116 coopère respectivement avec trois capteurs 117, 118, 119, qui permettent de déterminer la position de cette partie d'extrémité 116 de la barre. Chaque capteur comprend un bras 120, 121, 122, fixé sur l'extrémité 116 de la barre 105, et terminé par une partie dite cible 123, 124, 125, formée d'une palette relativement plane apte à coopérer avec un organe de détection ou sonde 126, 127, 128, placé en regard de cette palette, et qui est fixé par rapport au référentiel, c'est-à-dire dans ce mode de réalisation, à la jambe 113 par l'intermédiaire de la partie 115.

Pour permettre de déterminer chaque déplacement de

5

l'extrémité 116 de la barre et de façon descriminatoire, dans un mode très avantageux de réalisation, les trois capteurs dans leur structure définie ci-dessus sont disposés d'une façon déterminée par rapport à la position repos de la barre, comme défini ci-après.

Tout d'abord, on considérera pour faciliter la compréhension, un repère orthogonal fictif O ; x, x' ; y, y' ; z, z' ; lié par exemple à une section de référence du balancier 101, la barre 105 étant disposée de façon que le point de rotation de la rotule 114 soit sensiblement situé sur le point orgine O et que, dans sa position repos, l'axe O x soit confondu avec l'axe de la barre 105. L'axe O est de préférence choisi perpendiculaire au plan dans lequel la probabilité de déplacement par exemple du balancier est la plus grande, et enfin, en conséquence, l'axe O z se déduit des deux autres et se trouve donc dans le plan mentionné juste ci-avant.

Ainsi, pour le premier capteur 117, la palette 123 est centrée sur l'axe O y et, de façon que sa surface plane soit située dans le plan O y', O x, pour le second capteur 118, la palette 124 est située sur l'axe O z' et de façon que sa surface plane soit dans le plan O z', O y et, enfin, pour le troisième capteur 119, la palette 125 est centrée sur l'axe O y et de façon que sa surface plane soit dans le plan O y, O z.

Bien entendu, les organes de détection 126, 127 et 128 sont disposés par rapport aux palettes conformément aux éxigences de détection, ceux-ci étant

6

représentés schématiquement par des cylindres perpendiculaires au plan des palettes quand elles sont en position de barre au repos.

Ces capteurs pourront être, par exemple des capteurs inductifs ou à transformateur différentiel comme ceux qui sont commercialisés par la société VIBRO METER - Réf. 102, qui puissent délivrer un signal de préférence électrique en sortie, qui soit fonction de la distance moyenne, séparant la surface de la palette de la face d'entrée de chaque organe de détection.

Aussi, chaque sortie 129, 130, 131, des organes de détection 126, 127, 128, est reliée à l'entrée 132 d'un circuit électronique de calcul 133 qui pourra recevoir d'autres signaux 134, 135, provenant éventuellement d'autres systèmes de mesure, de détection, et qui pourra délivrer à sa sortie 136 des informations utilisables, notamment dans le cas des aérodynes, par les pilotes pour déterminer par exemple l'état de sous-gonflage d'un des pneus d'un atterrisseur.

Le fonctionnement du dispositif est le suivant. Dans la position repos de la barre 105 et donc du balancier 101, les palettes 123, 124 et 125 sont dans les plans définis précédemment. Pour faciliter la compréhension du fonctionnement, il sera envisagé successivement quatre cas séparés et tous les autres pourront alors s'en déduire. Dans un premier cas, on suppose que le balancier se déforme de façon qu'il fléchisse en se soulevant tout en restant dans le plan 0 z; 0 x. De ce fait, le balancier 101 par la patte 107 tire sur l'extrémité 111 de la barre 105. Cette barre

7

par la rotule 114 pivote autour du point 0 sans déformation, et entraîne dans la même rotation, tous les trois capteurs. Dans l'hypothèse choisie, cette rotation est équivalente à une rotation autour de l'axe y'y. De ce fait, la distance moyenne des palettes respectives 123 et 125 reste la même par rapport à leurs organes détecteurs 126 et 128, et aucun signal significatif n'est alors délivré par ces organes. Par contre, dans sa rotation autour de y, y', la barre entraîne le bras 121 et la palette 124 dans un déplacement qui tend à rapprocher la palette 124 de l'organe 127. Celui-ci va délivrer un signal correspondant qui sera interprété par le circuit de calcul 133.

Dans le deuxième cas, il est supposé que le balancier est soumis à une force qui tend à le tordre, tout en restant dans un plan parallèle au plan (y'oy, x'ox). La barre 105 est alors soumise à une rotation autour du point 0, mais aussi autour de l'axe zz'.

Dans ce mouvement, les palettes 123 et 124 restent sensiblement à la même distance, réelle ou moyenne, de leurs organes de détection respectifs 126 et 127, puisque la palette 123 reste dans le plan y'ox et que la palette 124 tourne autour de l'axe oz'. Par contre, la palette 125 se rapproche ou s'éloigne suivant le sens de la déformation du balancier 101 et l'organe 128 délivre un signal correspondant qui sera très facilement interprété par le circuit de calcul 133.

Dans un troisième cas, il est supposé que le balancier "s'allonge" ou se "rétrécit", alors seuls les

8

deux organes 127 et 128 sont influencés par un rapprochement ou éloignement correspondant, respectivement des deux parties 124 et 125. Pour sa part, la palette 123 reste toujours à la même distance de son organe de détection 126.

Enfin, dans le quatrième cas, on suppose que le balancier subit une torsion, ce qui arrive quand un des pneumatiques comme 104 est dégonflé. Dans ce cas alors, la barre 105, comme elle est fixée par la patte 107, subit au moins une rotation qui, dans une première approximation, peut être assimilée à une rotation autour sensiblement de son axe x'x, avec une autre rotation autour du point O. Alors, la palette 123 va, suivant le sens de la torsion du balancier 101, s'éloigner ou se rapprocher de son organe de détection 126 qui délivrera un signal correspondant, à sa sortie 129, représentatif de la torsion du balancier.

Il est bien évident que les hypothèses de déformation envisagées ci-dessus pourront se produire, mais dans beaucoup de cas, se seront des déformations composites.

De toutes façons, le circuit de calcul pourra tenir compte de tous les signaux délivrés aux sorties 129, 130 et 131, et élaborer des informations représentatives de la déformation réelle par exemple du balancier et les techniciens pourront en tirer les conséquences nécessaires.

Le dispositif décrit ci-dessus donne de bons résultats et le circuit électronique 133 peut, en fonction des informations reçues des différentes sondes, faire connaître la position de l'extrémité 116 de la barre 105.

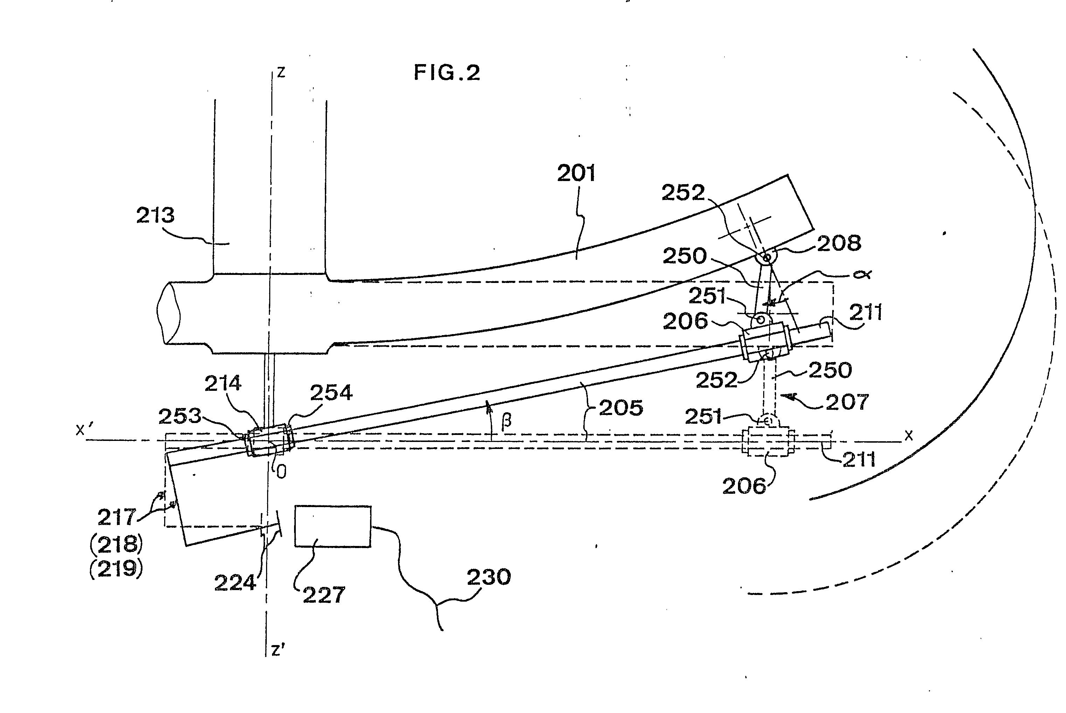

Par contre, pour certaines applications et notamment une flexion du balancier 101, on constate
que du fait de l'attache rigide 107, une unique
flexion du balancier 101 peut être interprétée
par la barre par une rotation, plus une translation et de ce fait, les deux capteurs 118 et 119
sont influencés. Ces deux mouvements peuvent,
bien entendu, être interprétés électroniquement.
Cependant, dans un but de simplification, on peut
réaliser un dispositif qui, pour une telle déformation, n'influence que le capteur 118. Le mode de
réalisation illustré sur la figure 2 permet d'obtenir ce résultat.

Le dispositif comprend une barre 205 associée à
trois capteurs 217, 218 et 219 formée d'une cible
224 et d'une sonde 227, de la même façon que selon les capteurs 117, 118 et 119. Cette barre est
montée sur une première rotule 214 liée au référentiel 0 x, y, z, mais cette rotule ne permet pas
une translation, celle-ci étant empêchée par tous
moyens comme par exemple deux plaques 253 et 254
qui sont solidaires de la barre qui autorisent
cependant la rotation sur elle-même.

A son autre extrémité 211, la barre comporte des
moyens de liaison comprenant une rotule 206 et une
biellette 250 montée rotative avec un seul degré
de liberté dans un plan sur deux axes 251 et 252
respectivement sur la rotule 206 et sur le balancier. Ces deux axes sont perpendiculaires au plan
mentionné ci-dessus qui est choisi, en fait celui
dans lequel peut s'effectuer la flexion du balancier.

10

C'est ainsi que, pour toute autre déformation du balancier dans un autre plan que celui mentionné ci-dessus, la biellette 250 constitue une liaison rigide entre le balancier 201 et l'extrémité 211 de la barre 205.

Sur la figure 2, on a représenté en pointillés le balancier 201 et la barre 205 dans une position normale de repos, et en trait plein le balancier et la barre après une flexion dans un plan. Dans ce cas, pour une déformation par flexion du balancier, le point d'attache 208 de la biellette 250 sur le balancier tire sur la barre pour lui faire subir une rotation $\beta$ autour du point 0 du référentiel, mais, du fait de la configuration particulière de la rotule 214, la barre ne se translate pas sur elle même. Par contre, la biellette, elle, pivote d'un angle $\alpha$ autour des deux axes 251 et 252 parce que le point d'attache 208 s'éloigne du point 0 dans cette configuration ou la barre est en-dessous du balancier.

Les mouvements relatifs du balancier 201, de la biellette 250 et de la barre 205 apparaissent nettement sur la figure ou ceux-ci ont été sciemment amplifiés afin de bien les mettre en évidence. Ainsi, le capteur 218 délivre seul un signal représentatif d'une flexion du balancier, les deux autres capteurs n'étant pas influencés de façon significative.

Le dispositif décrit ci-dessus trouve des applications particulièrement avantageuses, notamment dans le cas de la détection de l'état sous-gonflé des pneumatiques d'un aérodyne.

11

Dans ce cas, la barre de recopie est fixée à un endroit du train d'atterrissage le plus près possible des pneumatiques, tandis que son autre extrémité est ramenée à un endroit du train qui, de par sa structure, ne subit que peut de déformations lorsque, par exemple, un des pneumatiques n'est pas assez gonflé et/ou même creuvé.

La déformation subie par le train, et notamment la partie à proximité des pneumatiques, est analysée par les signaux délivrés par les capteurs et il est déduit une variation de la valeur de l'état de gonflement de pneumatiques.

Ceci permettra éventuellement, au pilote d'un tel aérodyne, d'intervenir et, par exemple, d'éviter un décollage, dans de mauvaises conditions, qui peut même être catastrophique.

Dans une autre application, le dispositif permet de détecter et éventuellement même de mesurer la masse et le centrage des masses totales d'un aérodyne.

En effet, on constate que suivant la masse embarquée à bord d'un aérodyne, les déformations des trains d'atterrissage, plus particulièrement au niveau des attaches des pneumatiques, sont révélatrices de cette masse embarquée et, en conséquence, de la masse totale de cet aérodyne.

Ainsi, en analysant les signaux délivrés par les capteurs, il est possible, notamment au pilote d'un tel aérodyne, d'en déduire la masse de son avion et, même, si ces masses sont parfaitement centrées par rapport au corps de l'avion.

12

REVENDICATIONS

1/ Dispositif de détection du déplacement d'un élément (101,201) par rapport à un référentiel (101,113), caractérisé par le fait qu'il comprend une barre de recopie (105,205), des moyens de liaison d'une première extrémité (111,211) de ladite barre avec ledit élément (106,107,206,207), l'autre seconde extrémité (112,116-212,216) de ladite barre (105) étant apte à coopérer avec des moyens de détermination du déplacement de cette seconde extrémité (112,116-212,216) par rapport audit référentiel.

2/ Dispositif selon la revendication 1, caractérisé par le fait que les moyens de détermination du déplacement de cette seconde extrémité (112,116-218,219) comprennent au moins un capteur (118,119-218,219) comportant au moins deux parties actives, l'une étant située sur ladite barre de recopie, l'autre fixée par rapport audit référentiel (101, 102).

3/ Dispositif selon la revendication 2, caractérisé par le fait qu'il comprend un deuxième capteur, les deux dits capteurs étant situés sur deux premiers axes (oy,oz') non confondus concourants en un point (0).

4/ Dispositif selon la revendication 3, caractérisé par le fait que ledit point (0) appartient à ladite barre (105,205).

5/ Dispositif selon la revendication 4, caractérisé par le fait qu'il comporte des moyens de maintien (114,115,214,215) de ladite barre (105,205) de façon à ce que ledit point (0) soit sensiblement fixe par rapport audit référentiel.

13

6/ Dispositif selon la revendication 5, caractérisé par le fait que lesdits moyens de maintien de ladite barre comporte une rotule (114,115-214, 215) entourant ladite barre (105,205), ladite rotule étant fixée audit référentiel (101,113-201,213).

7/ Dispositif selon la revendication 6, caractérisé par le fait que ladite barre (205) est montée dans ladite rotule (214) sans degré de liberté en translation (253,254) lesdits moyens de liaison (207) étant alors constitués par une seconde rotule (206) et une biellette (250) montée rotative autour de deux axes parallèles (251,252) situés respectivement sur ladite seconde rotule (206) et sur ledit élément (205).

8/ Dispositif selon la revendication 6, caractérisé par le fait que ladite barre est montée dans ladite rotule en ayant un degré de liberté en translation.

9/ Dispositif selon l'une des revendications 3 à 8, caractérisé par le fait que la première partie des capteurs comporte un bras (121,122) fixé à ladite barre en dehors dudit point, et une cible (124,125) solidaire dudit bras apte à coopérer avec la seconde partie des capteurs constituant un organe (127,128) apte à délivrer un signal fonction de la distance séparant ladite cible dudit organe.

10/Dispositif selon la revendication 9, caractérisé par le fait que lesdits organe et cible sont situés au voisinage d'un plan (oy,oz) passant par ledit point (o), et sensiblement perpendiculaire à ladite barre dans sa position repos.

14

11/ Dispositif selon la revendication 10, caractérisé par le fait que les deux dits capteurs (118,119-218,219) sont situés sensiblement dans ledit plan.

12/ Dispositif selon l'une des revendications 3 à 11, caractérisé par le fait qu'il comprend un troisième capteur (117) situé sur un troisième axe (oy') non confondu avec les deux dits premiers axes (oy,oz'), mais concourant au même dit point (o).

13/ Dispositif selon la revendication 12, caractérisé par le fait que ladite cible (123) dudit capteur (117) est perpendiculaire au plan formé par les deux dits premiers axes (oy,oz'), mais contenant ledit troisième axe (oy').

14/ Dispositif de détection de l'état sous-gonflé de pneumatiques de trains d'atterrissage pour aérodyne, caractérisé par le fait qu'il comprend une barre de recopie (105,205), des moyens de liaison d'une première extrémité (111,211) de ladite barre avec la partie du train d'atterrissage supportant les pneumatiques, l'autre seconde extrémité (112, 116-212,216) de ladite barre (105) étant apte à coopérer avec des moyens de détermination de la valeur du déplacement de cette seconde extrémité par rapport à une partie relativement rigide dudit train d'atterrissage, et des moyens pour interpréter ladite valeur de déplacement en vue de la détection d'un état sous-gonflé desdits pneumatiques.

15/ Dispositif de détection de la masse et centrage d'un aérodyne, comportant au moins un train d'atterrissage, caractérisé par le fait qu'il comprend une barre de recopie (105/205), des moyens de liaison d'une première extrémité de ladite barre

15

avec une partie dudit train d'atterrissage déformable sous l'action de la masse de l'aérodyne, l'autre seconde extrémité (112,116-212,216) de ladite barre étant apte à coopérer avec des moyens de détermination de la valeur du déplacement de cette seconde extrémité (112,116-212,216) par rapport à une partie rigide dudit train d'atterrissage.

FIG.1

0034964

FIG.2

0034964